# EUROPÄISCHE PATENTANMELDUNG

(11) **EP 0 719 511 A1**
(43) Veröffentlichungstag der Anmeldung: **03.07.1996**
(21) Anmeldenummer: 95120503.8
(22) Anmeldetag: 23.12.1995
(51) Int. Cl.: A45F 3/04

(54) **Tragegestellrucksack, Tragegestell (Kraxe) oder Tragegestellkindertrage mit Rädern und erweiterter Handhabung**

(30) Priorität: 31.12.1994 DE 4447319
(71) Anmelder: Hildebrandt, Bernhard, D-75323 Bad Wildbad (DE)
(72) Erfinder: Hildebrandt, Bernhard, D-75323 Bad Wildbad (DE)

(57) **Zusammenfassung**

Tragegestellrucksäcke oder Tragegestelle (Kraxen) oder Tragegestellkindertragen dienen dem Transport von Lasten. Bei den bisher bekannten Rucksäcken hat der Träger keine Alternative zum Tragen der Last auf dem Rücken. Die erfindungsgemäße Ausführung erlaubt es, den Rucksack auf Rädern (3) an einem Zuggeschirr hinter sich herzuziehen, wenn der Untergrund nicht ganz unregelmäßig ist (d.h. daß er praktisch nur noch beim Besteigen von Bergen, beim Durchqueren von Bächen oder Flüssen und auf zerklüftetem Fels getragen werden muß).

Die erfindungsgemäße Ausführung besteht aus einem Tragegestell, das am unteren Rahmenteil mit abnehmbaren Rädern (3) und am oberen Rahmenteil mit abnehmbaren Zugstangen (7) ausgerüstet ist, an denen sich ein Hüftgurt (8) (und evtl. Schultergurte) befinden, mit denen der Träger den rollenden Rucksack (1) hinter sich her zieht.

Diese Ausführung entlastet den Träger ganz erheblich, insbesondere dessen Wirbelsäule, verhindert Verkrampfungen und Schädigungen der Schulter- und Rückenmuskulatur und ermöglicht die Mitnahme wesentlich schwererer Ausrüstung. Damit werden Unternehmungen ermöglicht, die mit herkömmlichen Rucksäcken nicht durchführbar sind.

## Beschreibung

Kraxen (Tragegestelle) sind Rückentragen zum Transportieren von Gepäck, insbesondere von schwereren Lasten. Auf ihnen kann ein Gepäcksack befestigt sein (Tragegestellrucksack), sie können mit einem Sitzsack ausgerüstet sein (Kindertragegestelle) oder sie können Vorrichtungen zur Befestigung verschiedener Gegenstände aufweisen, z.B. für die Befestigung von Faltkanus, Schlauchbooten, Hängegleitern, Film- und Fotoausrüstung, wasserdichten Gepäckfässern usw.

Bekannt sind insbesondere je nach Einsatzzweck verschiedene Ausführungsformen von Tragegestellrucksäcken. Es gibt von der Firma Big Pack auch eine Kraxe und einen Tragegestellrucksack mit kleinen Rollen an der Unterseite des Tragegestells.

Tragegestellrucksäcke auf Rädern mit Zugvorrichtung und Zuggeschirr weist der Stand der Technik nicht auf.

Das Tragen von schweren Rucksäcken ist eine erhebliche Belastung für Schultern, Rücken und Hüften des Trägers. Für ungeübte Wanderer wird für eine längere Tragzeit empfohlen, daß das Gewicht des Rucksackes deshalb nicht höher als 10 % des Körpergewichtes sein sollte. Ein Gewicht von 6 bis 10 kg erlaubt aber nur die Mitnahme von warmer Kleidung und der Essensration für ein bis zwei Tage. Wenn für mehrtägige Ausflüge oder für Fernreisen noch Schlafsack, Leichtzelt und Kocher mitgenommen werden müssen, ergibt sich ein Gewicht von 17 bis 25 kg. Dort wo Wasser knapp ist und ein Wasservorrat mitgeführt werden muß, steigt dieses Gewicht noch einmal erheblich an, ebenso für Expeditionsausrüstungen. Eine solche Reise kann dann zur Schinderei werden.

Die üblichen Rucksäcke bieten dem Träger keine Erleichterung und keine echte Alternative zum beschwerlichen Tragen auf dem Rücken.

Der Rucksack der Firma Big Pack hat zwar kleine Rollen am unteren Ende des Tragegestells. Diese sind jedoch nur für langsames Rollen auf ganz ebenem Untergrund und zum Rollen auf sehr kurzen Strecken geeignet, also z.B. im Bahnhofsbereich, etwa entsprechend Koffern mit Rollen.

Die Tatsache daß keine Rucksäcke mit richtigen Rädern bekannt sind oder auf dem Markt angeboten werden, liegt daran, daß die alleinige Anbringung von Rädern an Rucksäcken nur einen geringen Vorteil bringt. Denn das Schieben oder Ziehen des Rollrucksackes mit der Hand bietet nur auf kurze Strecken eine Erleichterung, für längere Strecken ist es nicht geeignet.

Das Hauptproblem der Gewichtsbelastung durch den Rucksack stellen aber nicht die kurzen Strecken z.B. auf Bahnhöfen dar, sondern die mittleren und besonders die längeren Tragzeiten. Der Mehrpreis und das Mehrgewicht von richtigen Rädern lohnen sich erst, wenn eine solche neue Einsatzmöglichkeit (lange Strecken) geschaffen wird. Dies erfolgt erfindungsgemäß durch eine Zugvorrichtung und ein Zuggeschirr, mit dem der Rucksack über längere Strecken gezogen werden kann.

Es gibt für Menschen gebaute Zugvorrichtungen für Schlitten, die z.B. bei Expeditionen eingesetzt werden. Es handelt sich dabei um einfache Zugvorrichtungen mit beweglicher Lagerung der Zugstangen am Gerät und am Hüftgeschirr. Sie setzen ein stabil am Boden ruhendes Gefährt voraus. Solche Zugvorrichtungen wären bei Rucksäcken nur anwendbar, wenn diese in waagrechter Lage mit zwei Achsen und den entsprechenden Rädern (also mindestens drei) ausgestattet wären, die z.B. auf der Rückenseite angebracht sein müßten (damit der Rucksack wie ein Wagen in waagrechter Lage gezogen werden kann). Eine entsprechende Ausrüstung eines Rucksackes mit einer entsprechend langen Zugvorrichtung würde aber erheblichen konstruktiven Aufwand und Mehrgewicht bedeuten sowie eine lange Umrüstzeit zu einem auf dem Rücken tragbaren Rucksack bedingen. Außerdem ist im Gegensatz zu einer relativ ebenen Schneeoberfläche durchschnittliches Gelände viel unebener, was eine, einem Schlitten entsprechende, ziehbare wagenartige Konstruktion zu häufigem Umstürzen bringen würde.

Der erfindungsgemäße Rucksack soll den Träger von der Belastung durch das ständige Tragen des Rucksackes befreien, indem er nicht nur für kurze, sondern vor allem für lange Strecken eine spezielle, optimale Art der Beförderung auf Rädern bietet und zwar ohne großen Mehraufwand bei Konstruktion, Handhabung und Gewicht und ohne die Eignung zum Tragen auf dem Rücken einzuschränken. Der erfindungsgemäße Rucksack soll den Träger immer dann entlasten, wenn der Untergrund nicht zu uneben ist und somit ein Ziehen des Rucksackes mit der Zugvorrichtung auf den Rädern möglich ist (Straßen, Feld- Waldwege, Wiesen, Wüsten, usw., womit über 95% allen von Menschen begangenen Untergrundes erfaßt ist). Die Trageeigenschaften sollen dabei nicht beeinträchtigt werden, um den Rucksack über Geländehindernisse tragen zu können und natürlich soll die erfindungsgemäße Kombination dann auch noch das Schieben oder Ziehen des Rucksacks für kurze Strecken auf seinen Rädern mit der Hand erlauben.

Diese Aufgaben werden durch die im Patentanspruch aufgeführten Merkmale gelöst. Die erfindungsgemäße Lösung liegt dabei in einem auf einer Achse relativ aufrecht auf Rädern stehenden Rucksack, bei dem die Zugvorrichtung außer der Zuglast noch eine gewisse Abstützlast trägt und den Rucksack gegen Umstürzen stabilisiert. Radaufhängung und Zugvorrichtung sind dabei mit einem Minimum an konstruktiven Aufwand und Mehrgewicht zu realisieren und der Rucksack ist mit minimalstem Umrüstaufwand auch als Rucksack auf dem Rücken zu tragen (z.B. über Hindernisse, die nicht rollend überwunden werden können). Er ist dabei äußerst flexibel in seiner Handhabung, indem er mit ein paar Handgriffen vom Tragen auf dem Rücken zum Ziehen oder Schieben mit der Hand und vor allem zum Ziehen mit einem Zuggeschirr umgerüstet werden kann.
Vorteilhafte Ausgestaltungen einer Kombination eines Tragegestellrucksacks, Tragegestells (Kraxe) oder einer Tragegestellkindertrage mit Rädern sowie einer Zugvorrichtung und einem Zuggeschirr nach Anspruch 1. sind in den Unteransprüchen gekennzeichnet.
Der Zweck der Ansprüche geht meist aus den Ansprüchen hervor. Soweit zusätzliche Erklärungen erforderlich sind, folgen diese:
Die unter Anspruch 1.1., 1.2. und 1.5. aufgeführten Verstellmöglichkeiten dienen dazu, den Schwerpunkt des Rucksackes über die Radachse einzustellen, um eine möglichst geringe Belastung des Zuggeschirrs durch das Gewicht des Rucksackes zu erreichen und um die Räder zum Tragen auf dem Rücken evtl. in eine andere Stellung zu klappen. Die Verstellbarkeit bzgl. der Höhe und der Schwenkbarkeit des oberen bzw. unteren Teils des Tragegestells dient demselben Zweck und der Anpassung an die Größe des Benutzers, sowie dazu, die Größe des Rucksackes nach Bedarf zu verändern.
Die unter Anspruch 1.6. aufgeführten Verstellmöglichkeiten bezüglich des horizontalen Winkels der Zugstangen zueinander, bzw. des Freiraums zwischen den Zugstangen an ihrem freien Ende bedeutet, daß sie enger oder weiter eingestellt werden können, nicht nur für die Anpassung an die Breite der Benutzer, sondern auch, um die Vorrichtung sowohl in der Weise benutzen zu können, daß die Stangen zur Benutzung als reine Führungsstangen weiter eingestellt werden, wobei sie mit den Händen geführt werden und der Rollrucksack mit dem Zuggeschirr gezogen wird, als auch auf die Weise, daß sie enger eingestellt werden für die Befestigung am Zuggeschirr, wobei die Zugstangen dann sowohl das Ziehen als auch die Führung des Rollrucksackes übernehmen, wobei die Hände dann frei sind.
Die unter Anspruch 1.6.1. beschriebenen evtl. an den Stangen angebrachten zwei zusätzlichen Handgriffe (etwa in rechtem Winkel angebracht und bevorzugt nach unten weisend) dienen als Handgriffe zum unterstützenden Ziehen oder Schieben an den Stangen, wenn die Stangen am Zuggeschirr befestigt sind und als zusätzliche Griffmöglichkeit, wenn die Stangen als Führungsstangen genutzt werden und der Rollrucksack mittels der Zugschlaufen gezogen wird.
Der unter Anspruch 1.8. (am Ende) aufgeführte Zuggurt aus einer Bandverbindung aus breitem Gurtband bzw. dem geöffneten Hüftgurt, der zwischen den Zugstangen ausgespannt ist, ermöglicht es dem Benutzer, sich in die Bandverbindung zu lehnen und so den Hauptteil der Zug- bzw. Schubkraft aufzubringen, während er den Rucksack vor sich her schiebt oder hinter sich her zieht und ihn an den Stangen mit den Händen führt. Dies trägt zur Vielfältigkeit bei, mit der der Rollrucksack fortbewegt werden kann und solche Vielfalt verhindert vor eine Verspannung von Rücken- und Schultermuskulatur sowie eine einseitige Belastung der Beine und der Rumpfmuskulatur, welche durch eine stets gleichförmige Belastung auftreten kann. Dies ermöglicht somit ein gelockertes und damit längeres und ermüdungsfreieres Fortbewegen des Rollrucksackes. Dasselbe gilt für die Verstellmöglichkeiten, die in Unteranspruch 1.6. aufgeführt sind.
Zu der in Unteranspruch 1.10. genannten Vorrichtung zum Tragen von Kindern: Das erfindungsgemäße Tragegestell mit Rädern und Zugvorrichtung ist besonders auch als Kombination von Rucksack und Kindertragegestell geeignet. Kinder sind schon relativ schwer, bevor sie längere Strecken selbst gehen können und auf dem Rücken auch für Geübte nur mit Mühe zu tragen. Deshalb sind Kindertragen nur für diesen speziellen Zweck üblich und optimiert. Der erfindungsgemäße Rollrucksack ermöglicht es nun dadurch, daß er den Benutzer weitgehend vom Tragen entbindet und somit untragbare Lasten befördern kann, daß selbst Kombinationen von Rucksack und Kindertragen ermöglicht werden, wie es in den Unteransprüchen 1.10. aufgeführt ist.
Die vorhandene Zugvorrichtung bietet an, den Rollrucksack für spezielle Einsatzzwecke auch als Fahrradanhänger zu verwenden, wie es u.a. in Anspruch 1. und Unteranspruch 1.12. aufgeführt ist. Diese Verwendung ist vor allem sinnvoll, wenn der Rollrucksack mit dem Fahrrad an einen Startpunkt verbracht wird, von dem aus er dann als Zuggeschirr-Rollrucksack für einen Weitermarsch ohne Fahrrad eingesetzt wird.
Der erfindungsgemäße Rollrucksack ist sinnvollerweise auch in Kombination mit einem leichten Faltfahrrad einzusetzen, das am Ende der fahrbaren Strecke zusammengefaltet und auf dem Rollrucksack mitgenommen wird.
Mit dem erfindungsgemäßen Rucksack eröffnen sich somit überall dort neue Dimensionen, wo große Gepäckgewichte anfallen: Bei Ausflügen, Wanderungen, Expeditionen und Militär:

### Zum Beispiel

bewahrt er die gute Laune von naturliebenden Eltern, die nicht nur Verpflegung und Zelt der Familie, sondern eventuell noch erschöpfte und müde Kinder, ohne Rückenschäden befördern wollen.
Er erschließt Wassersportlern neue Gewässer durch den Transport ihrer Faltkanus oder Schlauchboote an Flüsse und Seen und über Tragestrecken.
Auf der Expedition kann er Lasten bewältigen, die nicht mehr zu tragen sind: Z.B. für 14-tägige Wanderungen durch die Wüste mit 50 Litern Wasser und 40 kg sonstigem Gepäck. Und wenn es bei einer Klettertour auf jedes Gramm ankommt, wird er mit ein paar Handgriffen durch Abnahme der Radachse samt Rädern zu einem Rucksack, der nicht mehr wiegt als ein herkömmlicher. Bergsteiger können ihn deshalb nutzen, um alles notwendige fürs Basislager (Wasser, Proviant, Zelte, Schlafsack und Kletterausrüstung) an den Fuß des Berges zu schaffen. Zum Gipfelsturm begleitet er sie dann ohne Zuggeschirr und Räder, nur mit dem jetzt noch Notwendigen bepackt.
Er gibt Naturfotografen neue Aussichten, indem er ihre schwere Foto- und Filmausrüstung trägt,
der Landschaftsmaler belädt ihn mit seiner Staffelei und den Farbenkästen,
der Gleitschirm- oder Drachenflieger erobert sich neue Fluggebiete,
der Jäger geht mit dem Rollrucksack auf dem Rücken zur Jagd und rollt dann seine Beute von den Bergen und aus Wäldern. Der Soldat befördert leicht seine Ausrüstung plus Waffe und Munition,
selbst einen verletzten, kranken und gehunfähigen Kameraden kann er zur Not bewältigen oder von der Front retten.
Er erhöht den Aktionsradius bei allen Wanderungen. Die bisherigen Beschränkungen bei Gepäck und Ausrüstung entfallen. Jeder Aktivität im Freien und in der Natur eröffnen sich neue Möglichkeiten.

### kurz:

Der erfindungsgemäße Rollrucksack macht möglich, was bisher unmöglich war.
Und auch bei herkömmlichen Wandertouren geht der Benutzer des erfindungsgemäßen Rucksackes locker und beschwingt an den Bedauernswerten vorbei, die sich mit der Last auf ihrem Rücken abquälen.

### Beschreibung von Ausführungsbeispielen:

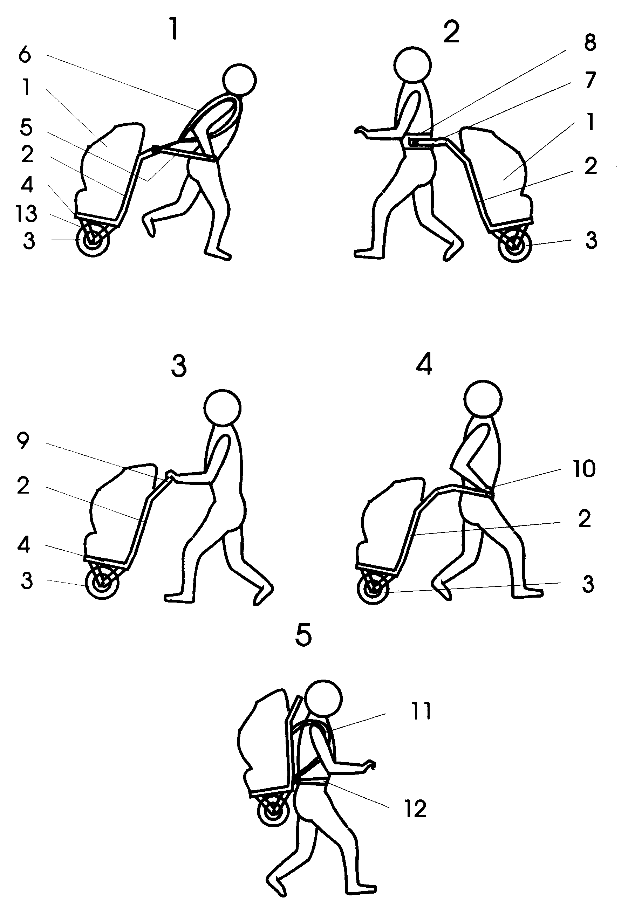

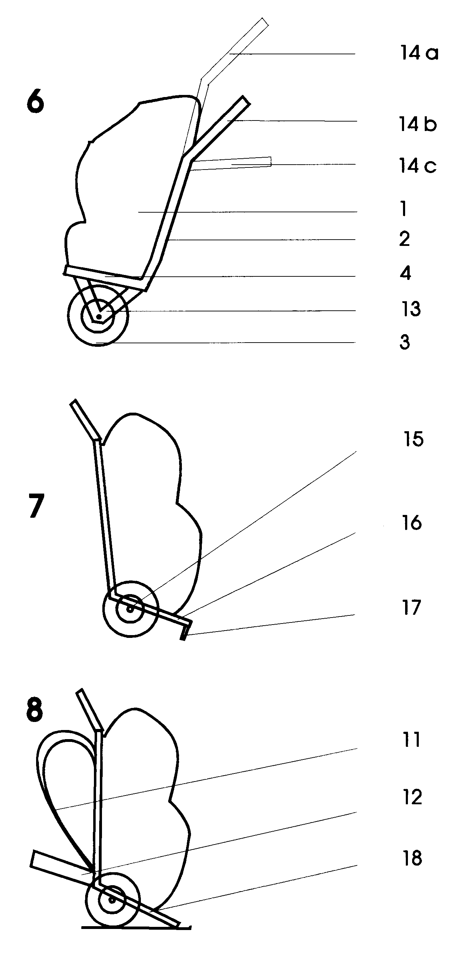

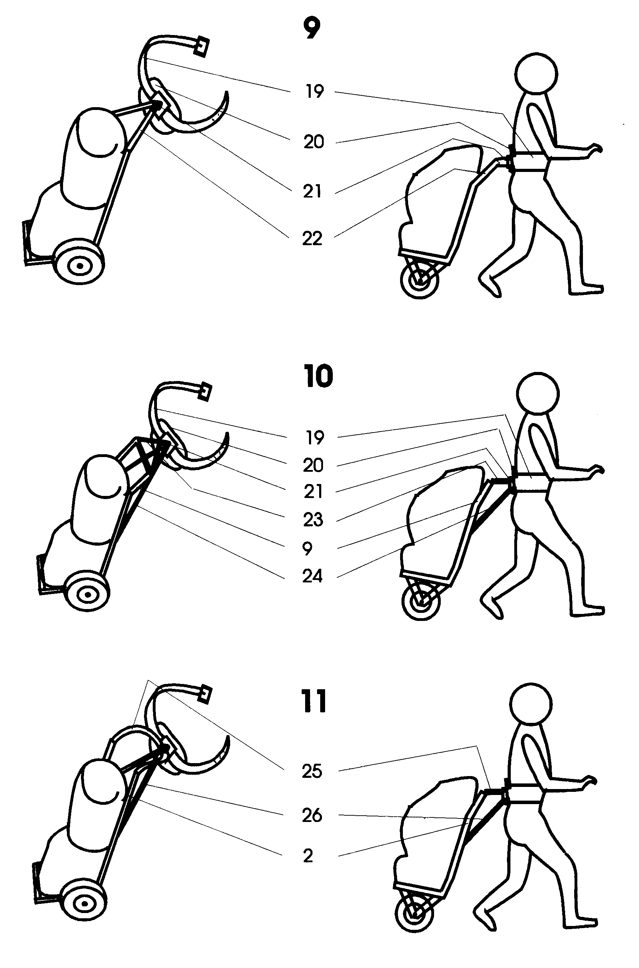

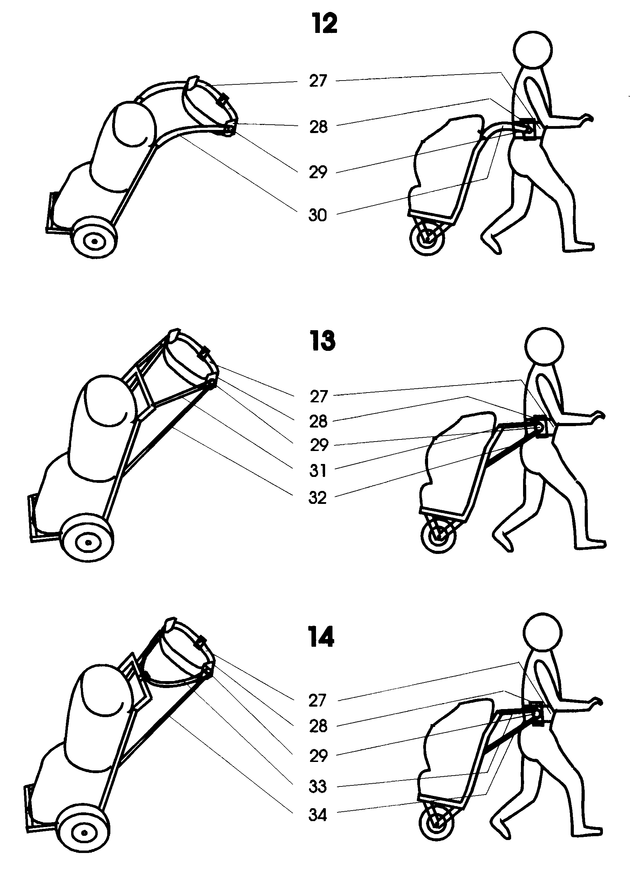

Die Zeichnungen 1 bis 4 zeigen die Handhabung des erfindungsgemäßen Rucksackes.
- Figur 1: zeigt das Ziehen eines erfindungsgemäßen Rollrucksackes (Gepäcksack=1) entsprechend Patentanspruch 1. Der Rucksack wird auf seinen Rädern (3), die hier auf Böcken (13) an der Gepäckstütze (4) am unteren Ende des Tragegestells befestigt sind, mittels der Zugschlaufen (6) gezogen und mit Führungsstangen (5) geführt, die hier oben an den Seitenrohren (2) angebracht sind.
- Figur 2: zeigt das Ziehen eines erfindungsgemäßen Rollrucksackes (Gepäcksack=1) entsprechend Patentanspruch 2. Der Rucksack wird auf seinen Rädern (3), mittels des Hüftzuggeschirrs (Hüftgurt) (8), an dem die Zugstangen (7), die hier oben an den Seitenrohren (2) angebracht sind, gezogen.
- Figur 3: zeigt die Möglichkeit, den Rollrucksack auf kürzere vor sich her zu schieben, wobei er am oberen Rahmenende (Bügel) (9), das mit Handgriffen versehen und ausziehbar sein kann, geführt wird.
- Figur 4: zeigt das Ziehen für kürzere Strecken mit den Händen an den aufgesteckten, ausgezogenen oder ausgeklappten Handgriffen (10), die am oberen Tragegestell, bevorzugt an den Seitenrohren (2) befestigt sind.
- Figur 5: zeigt das Tragen des Rucksackes auf dem Rücken mittels der Schultergurte (11) und des Hüftgurtes (12), welche bevorzugt so ausgebildet sind, daß sie nach dem Abnehmen vom Rucksack auch das Zuggeschirr bilden, mit dem der rollende Rucksack gezogen wird.
- Figur 6: zeigt eine Seitenansicht, in der 14a, 14b und 14c die Ausziehbarkeit bzw. Schwenkbarkeit des oberen Teils des Tragegestells illustrieren sowie Räder (3), die auf Böcken (13) an der Gepäckstütze (4) angebracht sind.
- Figur 7: zeigt ein Ausführungsbeispiel, bei dem die gegenüber einem herkömmlichen Rucksack vergrößerte Gepäckstütze (16) in stumpfem Winkel zum Rahmen steht und mit bevorzugt klappbaren Füßen (17) zum Abstellen des Rucksackes ausgestattet ist. Die Räder bzw. die Radachse (15) sind in diesem Beispiel direkt an der Gepäckstütze (16) befestigt.
- Figur 8: zeigt eine Seitenansicht mit einer ebenfalls vergrößerten und im stumpfen Winkel zum Tragegestell stehenden Gepäckauflage (18), die so bemessen ist, daß sie selbst als Abstellstütze ein aufrechtes Abstellen des Rucksackes erlaubt.
- Die Figuren 9 bis 11: zeigen Ausführungsbeispiele der EinPunkt-Verbindung-Zugvorrichtung, links jeweils eine Schrägaufsicht, rechts eine Seitenansicht.
- Figur 9: zeigt eine Ausführung mit 2 Zug-Führungsstangen (22), die am oberen Teil des Tragegestells fest angebracht sind und das Zuggeschirr, einen Hüftgurt (19), der an einer festen oder flexiblen, bevorzugt gepolsterten Platte (20) befestigt ist, die wiederum die Kupplung (z.B. Gummikupplung) (21) trägt, mit der die Zugstangen (22) am Hüft-Zug-Geschirr befestigt sind.
- Figur 10: zeigt eine entsprechende Ausführung, nur daß in diesem Beispiel vier Streben die Zugstangen bilden, wobei die oberen zwei (23) an einem oberen Bügel (9) des Tragegestells fest angebracht sind und die unteren zwei (24) an den Seitenrohren des Tragegestells.
- Figur 11: schließlich zeigt ein Beispiel einer flexiblen Zugvorrichtung. Die beiden unteren Streben (26) sind gelenkig an den Seitenrohren (2) des Tragegestells angebracht, an den oberen Enden der Seitenrohre (2) ist ein Bogen mit ein- oder zweidimensionaler Krümmung aus flexiblem Material (z.B. Glasfasercompound-Kunststoff) mit seinen Enden befestigt. Er sorgt durch seine federnden Eigenschaften für einen Ausgleich zwischen der ungleichförmigen Translationsbewegung des menschlichen Gehens und der gleichförmigen Rollbewegung des Rollrucksackes.
- Die Figuren 12 bis 14: zeigen Ausführungsbeispiele der ZweiPunkt-Verbindung-Zugvorrichtung links jeweils eine Schrägaufsicht, rechts eine Seitenansicht.
- Figur 12: zeigt eine Ausführung mit 2 Zugstangen (30), die an den oberen Enden der Seitenrohre des Tragegestells fest angebracht sind. Sie sind in den Kupplungen (29) mit dem Hüft-Zuggeschirr (27) verbunden, das unter den Kupplungen mit Polsterplatten (28) versehen ist.
- Figur 13: zeigt eine Zugvorrichtung aus 4 Streben, deren obere beide (31) an einem Bügel am oberen Ende des Tragegestells und deren untere beide an den Seitenrohren des Tragegestells fest angebracht sind.
- Figur 14: zeigt eine elastische Zugvorrichtung aus 2 starren unteren Streben (34) und einem elastischen Bogen (33), der in seiner Mitte am oberen Rahmen des Tragegestells angebracht ist.

## Patentansprüche

1. Tragegestellrucksack, Tragegestell (Kraxe) oder Tragegestellkindertrage mit Rädern am unteren Ende
gekennzeichnet dadurch daß
am Rahmen des Tragegestells eine feste oder abnehmbare Zugvorrichtung angebracht ist, die aus einer Verbindungs- (Kupplungs-) Vorrichtung zu einem Zuggeschirr an dem entsprechend dimensionierten oberen Ende des Tragegestells besteht oder bevorzugt aus einfachen oder zusammengesetzten Zug- und/oder Führungsstangen, welche etwa in Längsrichtung des Tragegestells oder nach vorn abgewinkelt oder gebogen zu dessen Längsrichtung verlaufen und die am rucksackfernen Ende die bevorzugt lösbaren Verbindungen zu einem Zuggeschirr und/oder einer Fahrradanhängerkupplung zum Ziehen des Rucksackes und/oder Handgriffe zur Führung des rollenden Rucksackes aufweisen,
und
entweder eine oder zwei Zugschlaufe(n) am Tragegestell befestigt sind, die über Schulter(n) und/oder Brust und/oder um die Hüfte laufen und die direkt oder mittels Gurten am Tragegestell befestigt sind (wobei die o.g. Stangen nur als Führungsstangen dienen, die mit den Händen geführt werden) oder die Zugvorrichtung an einen Hüftgurt (auch mit Schultergurten), der als Zuggeschirr ausgebildet ist, mittels Verbindungen in der Mittellinie über der Lendenwirbelsäule und/oder beidseits über den Hüften bevorzugt trennbar angekuppelt ist, wobei die Zugschlaufen oder der Zuggurt und der Zuggeschirr-Hüftgurt bevorzugt aus dem abnehmbaren und entsprechend ausgestatteten Hüftgurt und/oder den Schultergurten des Rucksackes bestehen oder Radsatz, Zugstangen, Zuggeschirr, und Fahrradanhängerkupplung(en) einen Bausatz bzw. Zubehörsatz oder Nachrüstsatz für bestehende Tragegestelle (Tragegestellrucksäcke, Tragegestellkindertragen) bilden.
1.1. Tragegestell mit Rädern und Zugvorrichtung nach Anspruch 1. wobei die zwei Räder (3) in einachsiger Anordnung an den unteren Enden der seitlichen Hauptrohre (2), an einem unteren Querrohr oder der, etwa senkrecht oder im stumpfen Winkel zu den Hauptrohren verlaufenden Gepäckstütze (4) am unteren Ende des Tragegestells angeordnet sind, wobei sie fest oder in senkrechter und/oder horizontaler Richtung kontinuierlich oder in Stufen durch Schwenkarme, auf denen sie angebracht sind, oder in Gleitschienen oder in Lochleisten verstellbar befestigt sind und die Räder fest oder abnehmbar angebracht sind und zwar auf Achsstummeln, auf die die Räder aufgesteckt werden oder die Räder mit Steckachsen versehen sind oder indem es sich um eine vollständig mit den Rädern abnehmbare Achse handelt oder um Radaufhängungen in Form von Böcken (13) oder Radgabeln, die mitsamt den Rädern abnehmbar sind wobei diese am unteren Ende des Rucksackes (einschließlich der Gepäckstütze) angebracht oder in die unteren Ausfallenden des Tragegestells eingesteckt oder an diesem befestigt sind (durch z.B. Klemmschließe, Kugelsperrbolzen, Klappsplint, Federvorstecker, Druckknopf-Federschnapper o.ä.), und die Radachsen oder die Böcke oder die untere Gepäckstütze, auf denen die Radachsen gelagert sind oder die Radgabeln durch Stützen, die zu den Seitenrohren (2) ziehen, abgestützt sein können, wobei die Stützen in der Länge verstellbar sein können und wobei in allen aufgeführten Fällen die Räder fakultativ durch Bremsklötze bremsbar sind und die Bremshandgriffe dann an einer oder beiden Zug-Führungsstangen angebracht sind, die über Bowdenzüge die Bremsen betätigen.
1.2. Tragegestell mit Rädern und Zugvorrichtung nach Anspruch 1., wobei die unteren Enden der Seitenrohre (2) des Tragegestells evtl. mitsamt einer Querstange fakultativ durch eine Längsverstellung (z.B. teleskopisch durch Einschub in die Seitenrohre (2)) des Tragegestells verstellbar sind und/oder der untere Teil des Tragegestells um eine Achse, die parallel zu der Radachse (also horizontal) steht, durch Schwenkung gegenüber dem oberen Teil des Tragegestells in Gelenken verstellbar ist.
1.3. Tragegestell mit Rädern und Zugvorrichtungkombination nach Anspruch 1., wobei die Gepäckstütze (4) (Bügel am unteren Ende des Tragegestells = Gepäckauflage), vergrößert ist (16,18) (d.h. der Abstand des Querrohres des Bügels zum übrigen Tragegestell ist vergrößert = die Tiefe der Gepäckstütze), und die Gepäckstütze auch in einem stumpfen Winkel (16,17) zu den Seitenrohren (2) fest oder gelenkig verstellbar mit diesen verbunden ist, wobei der Winkel bevorzugt so bemessen ist, daß der Gepäckbügel als Stütze zum aufrechten Abstellen des Rucksackes geeignet ist oder am hinteren Ende der Gepäckstütze eine oder zwei feste oder klappbare (auch federbelastete) Stützen (17) angebracht sind, die zum Abstellen des Rucksackes dienen und die Gepäckstütze bevorzugt mit festen oder längenverstellbaren Stützen gegen die Seitenrohre (2) abgestützt ist (wobei die Längenverstellbarkeit der Stützen in teleskopisch ausgebildeten Rohren oder in arretierbaren Gleit-Klemm- oder Einrastbefestigungen am Tragegestell oder Gepäckbügel bestehen kann) und die Gepäckstütze (4) evtl. mitsamt der an ihr befestigten Radachse (15) samt den Rädern, den eventuell vorhandenen Stützen zu den Seitenrohren und eventuell einschließlich der unteren Enden der Seitenrohre abnehmbar ist (so daß ein ganz normaler Tragegestellrucksack übrigbleibt).
1.4. Tragegestell mit Rädern und Zugvorrichtung nach Anspruch 1., wobei alternativ zu den Abstützfüßen am hinteren, unteren Ende des Rucksackes entsprechend 1.3. an einem oder beiden Seitenrohren bevorzugt nach vorn abklappbare Stützen angebracht sind, die als Abstellstützen des Rucksackes dienen oder die Zug-Führungsstangen sind so ausgebildet, daß sie am oberen Befestigungspunkt am Rahmen des Rucksackes drehbar befestigt sind und an der unteren Befestigung leicht ausklinkbar, so daß sie um den oberen Befestigungspunkt geschwenkt werden können (bevorzugt unten nach vorn) und so auch als Abstellstützen dienen.
1.5. Tragegestell mit Rädern und Zugvorrichtung nach Anspruch 1., wobei das obere Ende des Tragegestells bevorzugt einen geschlossenen Bogen bildet oder eine Querstange (9) aufweist, und der obere Teil des Tragegestells bzw. der Seitenrohre (2) auch mitsamt diesem Bogen oder mitsamt der Querstange durch teleskopischen Längenauszug in den Seitenrohren des Tragegestells oder durch Führung in Gleitrohren- oder Schienen längsverstellbar sind, und/oder der obere Teil des Tragegestells gegen den unteren Teil desselben kippverstellbar und arretierbar um eine Achse befestigt ist (14a bis 14c), die parallel zu der Radachse steht, also senkrecht auf der Längsausdehnungsrichtung des Rucksackes, so daß der Winkel zum übrigen Tragegestell veränderbar ist.
1.6. Tragegestell mit Rädern und Zugvorrichtung nach Anspruch 1., wobei im Fall einer Ein-Punkt Verbindung(21) die Zugvorrichtung aus dem evtl. verlängerten Tragegestellrahmen bestehen kann, wobei die lösbare Verbindung (Kupplung) zum Zuggeschirr und evtl. ein Handgriff und/oder eine Fahrrad-Anhänger-Kupplung sich in der Mitte des oberen Endes des Tragegestellrahmens direkt an diesem befindet oder die Zugvorrichtung aus geraden oder nach vorn und/oder innen oder außen gebogenen einfachen oder zusammengesetzten Zug- bzw. Führungsstangen oder Streben (5,7,10,22,
23,24,25,26,30,31,32,33,34) besteht, und diese Zugstangen aus einfachen (22,30) oder zusammengesetzten (23,24 und 31,32) festen, klappbaren, oder teilbaren Rohren oder Leisten bestehen (bevorzugt einem bis vier), die fest oder abnehmbar und/oder durch Auszug in ihrer Befestigung (z.B. durch Befestigung in Gleitrohrstücken oder Schienen oder Klemmvorrichtungen oder z.B. durch teleskopischen Auszug bevorzugt in den Seitenrohren des Tragegestells) kontinuierlich längsverstellbar und/oder in mehreren Stellungen drehbar und/oder
winkelverstellbar am Tragegestell angebracht sind, wobei eine weitere Strebe zur Fixierung dieser Verstellung dienen kann, und die Befestigung dieser Stangen oder Streben am Tragegestell entweder in einem Verbindungspunkt oder bevorzugt in zwei Verbindungspunkten besteht, die bevorzugt in zwei verschiedenen Höhen am Tragegestell liegen und zwar bevorzugt in der Art, daß die Zugstangen gelenkig oder fest in je einem oberen und unteren Punkt an den Seitenrohren (2), der oberen oder unteren Querstange, der Gepäckstütze (4) oder den Stützstreben der Gepäckstütze (entsprechend Anspruch 1.3.) in der Art befestigt sind, daß sie in mehreren Stellungen oder kontinuierlich verstellbar auch bezüglich der Ebene der Zugrichtung und senkrecht dazu, angebracht sind, wobei im Fall einer 2-Punkt-Verbindung die horizontale Verstellbarkeit der unteren Aufhängung bewirkt, daß die Zugstangen bezüglich des Winkels zueinander verstellbar sind, (also der Freiraum zwischen den Zugstangen an ihrem freien Ende enger oder weiter eingestellt werden kann), und im Fall einer Ein-Punkt-Verbindung diese Streben oder Zugstangen am rucksackfernen Ende etwa in einem Punkt verbunden sind, in dem die bevorzugt trennbare Kupplung (Verbindung) zum Zuggeschirr und/oder Handgriffe und/oder die Verbindungen zu einer Fahrradanhängerkupplung angebracht ist, wobei diese Verbindung in der Rückenmitte des Trägers zu liegen kommt oder im Fall einer 2-Punkt- Verbindung (29) die Streben oder Stangen jeder Seite im rucksackfernen Bereich in je einem Punkt verbunden sind, in dem sie die bevorzugt trennbaren Verbindungen zum Zuggeschirr und/oder Handgriffe und/oder Verbindungen zu einer Fahrradanhängerkupplung tragen, wobei die Verbindungen seitlich über die Hüften des Trägers zu liegen kommen.
1.6.1. Zug/Führungsstangen nach Anspruch 1.6. wobei an den unter 1.6. beschriebenen Stangen zwei zusätzliche gerade oder abgewinkelte Handgriffe angebracht sind, die etwa in rechtem Winkel, bevorzugt nach unten weisend, oder durch eine lösbare Klemmbefestigung oder sonstige verstellbare Befestigung an den Zugrohren auch in der Längsrichtung der Zugrohre auf diesen verschiebbar und drehbar aufgesetzt sind, so daß sie z.B. nach oben und unten, innen und außen weisen können (Handgriffe zum unterstützenden Ziehen oder Schieben).
1.6.2. Zug- bzw. Führungsstangen nach Anspruch 1.6., wobei die Zugstangen oder Streben nicht starr sind, sondern aus teleskopisch federnden Rohren bestehen oder durch ein Gelenk bezüglich ihrer Längsausdehnung durch Knicken veränderbar sind, wobei der Bewegung in diesem Gelenk durch elastische Materialien (Federn, Gummi) entgegengewirkt wird oder daß sie über kleine, etwa senkrecht zu den Zugstangen an deren Enden liegende Hebel entweder mit dem Tragegestell oder dem Zuggeschirr verbunden sind und eine gefederte Bewegung der Zugstangen in ihrer Längsrichtung dadurch gegeben wird, daß die Drehung der Hebel durch Feder oder Gummizüge oder Puffer beaufschlagt und begrenzt wird oder die Längselastizität wird dadurch erreicht, daß die Zugstangen (oder ein Teil der Zugstangen) an der Befestigung am Tragegestell oder am Zuggeschirr in längselastischen Führungen aufgehängt ist, oder die Zugstangen bestehen ganz oder teilweise aus biegsamem Material (wobei sie dann bevorzugt gebogen und nicht gerade sind), wobei die Anordnung der Zugvorrichtung insbesondere so ausgeführt sein kann, daß drei oder vier Streben auf zwei Höhen am Tragegestell (einschließlich Gepäckstütze (4) oder Stützstrebe der Gepäckstütze entsprechend Anspruch 1.3.) befestigt sind, wobei dann jeweils die Strebe(n), die auf einer Höhe befestigt ist (sind), längselastisch aufgehängt oder biegsam und die andere(n) starr ist (sind) und die flexible(n) mit ihrem einen Ende am Tragegestell und mit ihrem anderen Ende entweder an der Verbindungsstelle am Zuggeschirr angesetzt ist (sind) oder an der starren Zugstange, insbesondere auch in der Art, daß die beiden flexiblen Streben einen durchgehenden elastischen Bogen bilden (25), dessen Enden am Tragegestell befestigt sind und der in der Mitte an der Verbindungsstelle zum Hüftgeschirr (21) befestigt ist oder der umgekehrt (33) mit seinen beiden Enden seitlich an den Verbindungsstellen des Hüftgeschirrs (29) oder an den starren Stangen oder Streben befestigt ist und in der Bogenmitte am Tragegestell.
1.7. Tragegestell mit Rädern und Zugvorrichtung nach Anspruch 1., wobei in dem Fall, daß die Zug-Führungsstangen nicht an dem Zuggeschirr befestigt sind, sondern nur mit den Händen geführt werden, die Zugschlaufen (6) direkt oder mittels Zugleinen gemeinsam oder jede für sich an einem oder in mehreren Punkten des Tragegestells bevorzugt abnehmbar befestigt sind und wobei eine Zugschlaufe über eine Schulter und quer über die Brust verläuft oder die Schlaufen etwa wie die Tragriemen eines Rucksackes geformt sind und je eine über eine der beiden Schultern führt und unterhalb der Achselhöhlen am seitlichen Oberkörper wieder zum Tragegestell des Rucksackes zurück, wobei die beiden Schlaufen fakultativ mittels einer oder mehrerer Verbindungsbänder oder - schnüre miteinander verbunden sind, und das Zuggeschirr fakultativ zusätzlich einen Hüftgurt beinhaltet, der bevorzugt mit einem oder beiden Enden der Zug-Trageschlaufen verbunden ist, wobei dann die Zugleinen direkt am Hüftgurt oder an den Zug-Trageschlaufen in der Nähe ihrer Befestigung am Hüftgurt, oder ein Teil der Zugleinen an den Trageschlaufen und ein Teil am Hüftgurt oder an den Zug-Trageschlaufen in der Nähe ihrer Befestigung am Hüftgurt befestigt sind oder das Zuggeschirr nur aus dem Hüftgurt besteht, wobei die Zugleine(n) dann an einem oder zwei oder mehreren Punkten des Hüftgurtes befestigt sind.
1.8. Tragegestell mit Rädern und Zugvorrichtung nach Anspruch 1., wobei in dem Fall, daß die Zugstangen am Zuggeschirr befestigt sind, und das Hüft-Zuggeschirr aus einer Ein-Punkt-Verbindung (21) besteht, das Zuggeschirr aus einer der Kontur der Lendenwirbelsäule bzw. des Übergangs der Lendenwirbelsäule zum Kreuzbein entsprechend gewölbten und gepolsterten Rückenplatte (20) aus einem festen oder flexiblen Material besteht und aus einem Gurt (19), der an der Rückenplatte befestigt oder in sie intergriert ist und der um die Hüfte bzw. Taille gelegt wird, und in dem Fall, daß das Hüft-Zuggeschirr aus einer Zwei-Punkt-Verbindung (29) besteht, das Zuggeschirr aus einem entsprechenden Gurt (27) besteht, der mit Polsterungen oder Polsterplatten (28) unter den Verbindungsstellen über den Hüften versehen ist oder diese in ihn integriert sind oder der Hüftgurt eine über den Rücken gurtförmig bis über die Hüften durchgehende elastische, gepolsterte Platte enthält, an der über dem Rücken und/oder über den Hüften die Verbindungsstellen zu den Zugstangen angebracht sind oder das Zuggeschirr von einem Bügel gebildet wird, an dessen freien, vorderen Enden, die bei angelegter Zugvorrichtung über den Hüften zu liegen kommen, der Hüftgurt befestigt ist, wobei der Bügel so geformt ist, daß er bei angelegtem Hüftgeschirr über dem Hüftgurt aber mit einem gewissen Abstand zu diesem verläuft, damit die Zug- oder Druckkräfte des Rucksackes nur über den Hüftgurt übertragen werden und der Bügel selbst keinen Körperkontakt hat, oder der Bügel ist so ausgeführt, daß er mit der o.g. Rückenplatte oder der Rücken-Hüft-Polsterplatte kombiniert ist, also die Kraftübertragung durch Körperkontakt über den als gepolsterte Platte entsprechend der menschlichen Anatomie gewölbten Bügel erfolgt, wobei dann in der Mitte des Bügels oder der Rückenplatte oder über den Hüften die Verbindung(en) zu den Zugstangen angebracht sind, wobei der Hüftgurt bei den beschriebenen Ausführungen fakultativ mit Schulterriemen versehen ist, und das Tragesystem des Rucksackes, das ebenfalls aus Trageschlaufen (Schulterriemen) und Hüftgurt besteht, fakultativ so ausgebildet ist, daß es insgesamt (Hüftgurt (12) und Schulterriemen (11)) oder teilweise (nur Hüftgurt oder nur Schulterriemen) leicht abnehmbar ist und die Befestigungspunkte und die genannte Ausstattung aufweist, die es als Zuggeschirr, bestehend aus Hüftgurt und/oder Schultergurten (-schlaufen) nutzbar machen oder das Hüftgeschirr besteht statt aus einem geschlossenen Hüftgurt aus einer Bandverbindung aus breitem Gurtband oder dem geöffneten bisher beschriebenen Hüftgurt, das (der) zwischen den Zugstangen ausgespannt ist, wobei das Gurtband bevorzugt entweder so geformt ist, daß es von beiden Seiten für die Beaufschlagung mit der Körperkraft geeignet ist (also glatt ohne vorstehende Nähte oder Kanten, oder auf beiden Seiten gepolstert) oder in seinen Befestigungen an den ZugFührungsstangen um mindestens ca. 180° drehbar ist, so daß die zur Aufnahme des Körperkontaktes geeignete Seite nach vorn und hinten gewendet werden kann.
1.9. Tragegestell mit Rädern und Zugvorrichtung nach Anspruch 1. wobei die Kupplung oder die Kupplungen bzw. Verbindung(en) (21,29) zwischen Zugstangen und Zuggeschirr fest oder trennbar sind und/oder Gelenke darstellen, die für den Fall einer Ein- oder Zwei-Punkt-Verbindung eine Drehung um eine senkrechte und waagerechte Achse zulassen (z.B. Kreuzgelenk) oder eine Drehung um drei Achsen zulassen (z.B. Kugelkupplung) oder für den Fall einer Zwei-Punkt-Verbindung Gelenke enthalten (oder aus solchen bestehen), die eine Drehung um eine waagerecht durch beide Anbindestellen gehende Achse zulassen oder für Ein- und Zwei-Punkt-Verbindungen aus elastischem Material bestehen (z.B. Gummikupplung, Kunststoffkupplung, Feder, Anbindung durch Schnüre).
1.10. Tragegestell mit Rädern und Zugvorrichtung nach Anspruch 1. wobei an den beiden Seitenrohren des Tragegestells ein zweiter offener oder geschlossener Bügel, entsprechend und etwa parallel zu der Gepäckstütze (4), aber höher als diese am Tragegestell angebracht ist, oder zwei bevorzugt klappbare oder in Halterungen der Seitenrohre des Tragegestells einsteckbare Rohrstücke, wobei der Bügel oder die Rohrstücke den geschlossenen oder offenen Rahmen für eine Gewebe-, Leder-, oder Kunststoffbespannung bilden, die als Kindersitz dienen oder sie bilden den geschlossenen oder offenen Halterahmen für einen festen oder einhängbaren / aufschiebbaren Kindersitz in Form eines Sitzsackes aus Gewebe, Kunststoff oder Leder oder die Gepäckstütze ist durch eine Klemmverbindung auf beliebiger Höhe der Seitenrohre des Tragegestells arretierbar und mit einem bevorzugt anknöpfbaren oder aufschiebbaren Kindersitz in Form eines Sitzsackes oder einer festen oder flexiblen Sitzfläche versehen, wobei der Kindersitz durch einen zusätzlichen Bügel oberhalb der Sitzfläche ergänzt werden kann, der als Rückenstütze (Lehne) bzw. Bauchbügel dient (je nach Sitzrichtung des Kindes) und der alleinige Sitz(sack)-bügel oder der obere zusätzliche Bügel auch aus dem nach hinten bügelförmig gebogenen oberen Querrohr des Tragegestells bestehen kann und die Sitz- und Haltebügel durch Gurte oder eine Gewebe-, Leder-, oder Kunststoffbespannung miteinander verbunden sein können, einen geschlossenen Sitz bildend, der aber zumindest Öffnungen zum Durchstecken der Beine nach vorn und/oder hinten freiläßt oder der Sitzsack bzw. der Sitz ist statt an einem Haltebügel und/oder Sitzbügel lediglich durch Schnüre, Gurte bzw. dem Gewebesitz oder Sitzsack angeformten Befestigungen mit dem Rohrgestell des Tragegestells verbunden - bevorzugt an den Seitenrohren - die oberen Befestigungen auch am oberen Querrohr - und dieser Kindersitz nicht nur zusätzlich zu dem Rucksack (Gepäcksack) an dem Tragegestell befestigbar ist, sondern auch nach Abnehmen des Rucksackes als alleinige Vorrichtung am Tragegestell befestigt werden kann, so daß die Vorrichtung entweder Tragegestellrucksack oder Kindertrage oder beides ist oder diese Kindersitzzusätze einen Bausatz bzw. Zubehörsatz oder Nachrüstsatz für bestehende Tragegestellrucksäcke oder Tragegestellkindertragen bilden.
1.11. Tragegestell mit Rädern und Zugvorrichtung nach Anspruch 1. wobei sie für Drachenflieger so ausgeführt ist, daß die Zugstangen die Maße der Trapezseitenrohre des Flugdrachens aufweisen und/oder die Räder die Maße (insbesondere Innendurchmesser) der Bügelräder (und sie somit als solche einsetzbar sind).
1.12. Tragegestell mit Rädern und Zugvorrichtung nach Anspruch 1. wobei eine Stange, die ihrer Länge nach etwa zwischen die Ausfallenden der Zugstangen paßt, an ihren Enden mit den Gegenstücken der Kupplungen (Verbindungen) zum Zuggeschirr ausgestattet ist, wobei diese Stange an Stelle des Zuggeschirrs zwischen die Zugstangen eingesetzt wird, und diese Stange bevorzugt in ihrer Mitte eine Kupplung trägt, deren Gegenstück am Hinterende eines Fahrrades, bevorzugt am Gepäckträger oder der Sattelstütze angebracht ist oder für die Zuggeschirr-Kupplung an einer der beiden Zugstangen ein entsprechendes Gegenstück bereitgestellt wird, das zur Montage an einem Fahrradrahmen bevorzugt an einer der seitlichen Hinterachsstreben oder einer Strebe des Gepäckträgers geeignet ist oder eine der beiden Zug- Führungsstangen an ihrem Ende außer dem Handgriff und/oder der Verbindungsstelle (Kupplung) zum Zuggeschirr eine zusätzliche feste oder abnehmbare Verbindungsstelle (Kupplung) aufweist, die sich in ein Gegenstück, das an einem Fahrradrahmen montierbar ist, (bevorzugt an einer der seitlichen Hinterachsstreben oder einer Strebe des Gepäckträgers), einkuppeln läßt.
